**Europäisches Patentamt**

**European Patent Office**

**Office européen des brevets**

(19)

(11) Numéro de publication : **0 462 025 B1**

# (12) FASCICULE DE BREVET EUROPEEN

(45) Date de publication du fascicule du brevet :
05.04.95 Bulletin 95/14

(51) Int. Cl.⁶ : **H02H 9/04**

(21) Numéro de dépôt : **91420173.6**

(22) Date de dépôt : **30.05.91**

(54) **Parafoudre déconnectable pour installations à basse tension.**

(30) Priorité : **11.06.90 FR 9007316**

(43) Date de publication de la demande :
**18.12.91 Bulletin 91/51**

(45) Mention de la délivrance du brevet :
**05.04.95 Bulletin 95/14**

(84) Etats contractants désignés :
**AT BE CH DE ES GB IT LI SE**

(56) Documents cités :
**EP-A- 0 130 851**
**US-A- 4 803 436**

(73) Titulaire : **SCHNEIDER ELECTRIC SA**
**40, avenue André Morizet**
**F-92100 Boulogne Billancourt (FR)**

(72) Inventeur : **Bonniau, Michel**
**Merlin Gerin - Sce. Brevets**
**F-38050 Grenoble Cedex (FR)**

(74) Mandataire : **Hecke, Gérard et al**
**Schneider Electric SA,**
**Sce. Propriété Industrielle**
**F-38050 Grenoble Cédex 09 (FR)**

EP 0 462 025 B1

EP 0 462 025 B1

## Description

L'invention est relative à un parafoudre déconnectable inséré entre un réseau alternatif à basse tension et la terre, et comportant:

- un limiteur de surtension à élément non linéaire variable avec la tension, notamment une varistance et/ou un éclateur à gaz,
- un dispositif de déconnexion équipé d'un contact d'interruption actionné par un mécanisme,
- et un circuit de déclenchement sensible au courant parcourant le parafoudre pour coopérer avec le mécanisme lorsque le limiteur de surtension est défectueux, entraînant la déconnexion automatique du parafoudre par ouverture du contact, la destruction du limiteur de surtension résultant du passage irréversible d'un premier état transitoire de mise en court-circuit vers un deuxième état final de destruction.

Le deuxième état de destruction du limiteur de surtension, correspond à un circuit de terre ouvert, dans lequel le circuit de déclenchement est incapable de piloter le déclenchement du mécanisme. Le contact du dispositif de déconnexion est alors immobilisé en position fermée, et le parafoudre reste connecté au réseau malgré la destruction du limiteur de surtension. Les règlements actuels en vigueur se limitent exclusivement à l'aspect de sécurité des personnes, et ne tiennent pas compte des contraintes techniques liées à la destruction des parafoudres. La norme française NF C 61-740 stipule que la déconnexion doit intervenir moins de 50 millisecondes après apparition d'un courant de 4 ampères. Ce temps de déconnexion est trop long, car le limiteur de surtension risque de passer dans le deuxième état de destruction, avant l'intervention du dispositif de déconnexion.

L'objet de l'invention consiste à améliorer la déconnexion des parafoudres à basse tension en fin de vie du limiteur de surtension.

Le parafoudre selon l'invention est caractérisé en ce que des moyens de commande du circuit de déclenchement associé au mécanisme assurent la déconnexion durant le premier état transitoire du limiteur de surtension avant le passage vers le deuxième état, et que le temps de déconnexion est inférieur à 20ms lorsque le courant limité atteint ou se trouve au-dessus d'une intensité de 10A et respectivement inférieur à 100ms et 50ms pour des intensités de courant de 0,25A et 1A.

La caractéristique de non fonctionnement du dispositif de déconnexion doit être définie non pas en fréquence industrielle, mais à l'aide d'ondes de courant transitoires que le parafoudre peut être amené à écouler normalement.

L'adoption de la courbe de déclenchement selon l'invention permet de s'assurer que la déconnexion du parafoudre est effective lorsque le limiteur de surtension est hors d'usage. Cet état déconnecté est signalé par l'indicateur du mécanisme dès que le contact d'interruption s'ouvre.

D'autres avantages et caractéristiques ressortiront plus clairement de la description qui va suivre d'un mode de réalisation de l'invention donné à titre d'exemple non limitatif, dans lequel:

- la figure 1 montre le schéma électrique unipolaire d'un parafoudre déconnectable associé à un réseau à basse tension, le contact d'interruption du dispositif de déconnexion étant représenté en position ouvert;
- la figure 2 illustre différents diagrammes de fonctionnement du parafoudre.

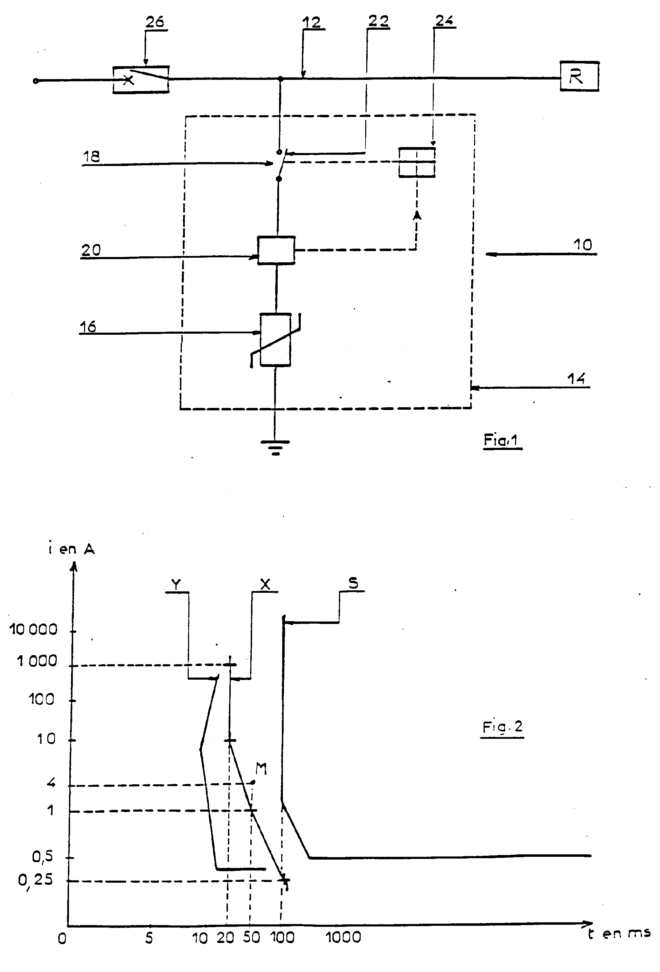

Sur la figure 1, la parafoudre 10 déconnectable est raccordé en parallèle entre un réseau 12 alternatif à basse tension et la terre pour protéger une installation électrique R contre les effets de surtensions d'origine externe ou interne. Le parafoudre 10 est logé dans un boîtier 14 isolant, renfermant un limiteur de surtension 16 connecté en série avec un dispositif de déconnexion 18 piloté par un circuit de déclenchement 20. Le limiteur de surtension 16 comporte au moins un élément non linéaire variable avec la tension, notamment une varistance à oxyde de zinc, et/ou un éclateur à gaz.

Le dispositif de déconnexion 18 est équipé d'un contact 22 d'interruption actionné par un mécanisme 24, lequel coopère avec le circuit de déclenchement 20 pour commander la mise hors service du parafoudre 10 en fin de vie du limiteur de surtension 16.Le réarmement du mécanisme 24 est inhibé après déconnexion du parafoudre 10 suite à l'ouverture du contact 22 après déclenchement automatique.

Le circuit de déclenchement 20 comporte à titre d'exemple, un capteur de courant associé à un relais de déclenchement du mécanisme 24, ou tout autre type de déclencheur, notamment électromagnétique, différentiel, ou électronique, sensible au courant circulant dans le parafoudre 10.

Le fonctionnement d'un tel appareil de protection est bien connu des spécialistes, et ressort par exemple du document EP-A-130.851. En service normal du parafoudre 10, le contact 22 est fermé, et le limiteur de surtension 16 assure une protection efficace contre les surtensions. Le seuil de déclenchement et le temps de réponse du circuit de déclenchement 20 sont agencés pour permettre le passage de faibles courants de fuite, ou de décharges transitoires vers la terre.

En fin de vie du parafoudre 10, la destruction du limiteur de surtension 16 engendre un courant de fuite

2

important dépassant le seuil du circuit de déclenchement 20,avec émission d'un ordre de déclenchement vers le mécanisme 24. Il en résulte l'ouverture du contact 22 qui déconnecte automatiquement le parafoudre 10 du réseau 12. Le mécanisme 24 reste en position déclenchée, et ne peut être réarmé.

Le réseau 12 est alimenté par un disjoncteur 26 d'abonné disposé en amont du parafoudre 14, par rapport à l'installation R.

Un dispositif de signalisation (non représenté) indique l'état connecté ou déconnecté du parafoudre 10.

Le limiteur de surtension 16 et le dispositif de déconnexion 18 sont disposés dans le même boîtier 14, mais il est clair qu'ils peuvent être logés dans des boîtiers séparés.

La caractéristique de destruction des varistances à oxyde de zinc ou des éclateurs à gaz du limiteur de surtension 16 impose un temps de réponse très court de l'ensemble circuit de déclenchement 20 et dispositif de déconnexion 18. Lors de la phase de destruction, le limiteur de surtension 16 passe d'un premier état de mise en court-circuit vers un deuxième état final de destruction. Ce deuxième état est atteint après emballement thermique de l'élément non linéaire.

Dans le premier état, la mise en court-circuit est plus ou moins rapide en fonction de l'énergie écoulée. La déconnexion du parafoudre 10 par ouverture du contact 22 doit impérativement s'effectuer dans le premier état transitoire de mise en court-circuit du limiteur de surtension 16, étant donné que l'intervention du circuit de déclenchement 20 est rendue impossible dans le deuxième état correspondant à un circuit de terre ouvert. Le temps de passage du premier état vers le deuxième état dépend de l'intensité du courant de court-circuit limité par le parafoudre 10. Sur le diagramme X de la figure 2 représentant la caractéristique du temps limite de destruction du limiteur de surtension 16, on remarque que la déconnexion du parafoudre 10 doit être opérée dans un temps inférieur à 20ms (millisecondes) lorsque le courant limité i atteint 10A (Ampères). La table suivante indique les principales coordonnées du temps total tD de déclenchement à ne pas dépasser pour différentes intensités du courant i:

| i en A | 0,25 | 1 | 10 | 1000 |
|---|---|---|---|---|
| tD en ms | 100 | 50 | 20 | 20 |

On remarque que pour un point de fonctionnement M situé à droite du diagramme X, et correspondant à un temps de déclenchement de 50ms pour un courant de 4A, le limiteur de surtension 16 risque de se trouver dans le deuxième état d'interruption avant déconnexion du parafoudre 10. Dans ce cas, le contact 22 reste fermé, et l'indicateur du mécanisme 24 signale l'état connecté du parafoudre 10, malgré la destruction du limiteur de surtension 16. La signalisation de l'état du parafoudre est alors erronée, étant donné que le dispositif de déconnexion 18 était incapable de prendre en compte la destruction du limiteur de surtension 16.

La courbe de réponse Y située à gauche du diagramme X illustre la variation du temps de déconnexion du parafoudre 10. Dans ce cas, on est sûr que la déconnexion par ouverture du contact 22 s'effectue dans le premier état du limiteur de surtension 16. L'état hors d'usage du parafoudre 10 est alors signalé réellement par l'indicateur du mécanisme 24.

La caractéristique de non fonctionnement du dispositif de déconnexion 18 doit être définie non pas en fréquence industrielle, mais à l'aide d'ondes de courant transitoires, que le parafoudre 10 peut être amené à écouler normalement. Deux types d'ondes de courant peuvent être utilisés pour les essais, lesquels présentent des intensités jusqu'à 30kA pour des durées de 8/20 microsecondes, et jusqu'à 200A pour des durées de 10/1000 microsecondes.

La courbe S (figure 2) représente la courbe de déclenchement du déclencheur différentiel temporisé de sensibilité 500mA intégré dans le disjoncteur d'abonné 26. La courbe S est située à droite du diagramme X, la temporisation du déclencheur différentiel étant fixée à titre d'exemple à 100 millisecondes.

L'invention s'applique également à un parafoudre multipolaire.

## Revendications

1. Parafoudre déconnectable inséré entre un réseau (12) alternatif à basse tension et la terre, et comportant:
   - un limiteur de surtension (16) à élément non linéaire variable avec la tension, notamment une varistance et/ou un éclateur à gaz,
   - un dispositif de déconnexion (18) équipé d'un contact (22) d'interruption actionné par un mécanisme (24),

- et un circuit de déclenchement (20) sensible au courant parcourant le parafoudre (10) pour coopérer avec le mécanisme (24) lorsque le limiteur de surtension (16) est défectueux, entraînant la déconnexion automatique du parafoudre (10) par ouverture du contact (22), la destruction du limiteur de surtension (16) résultant du passage irréversible d'un premier état transitoire de mise en court-circuit vers un deuxième état final de destruction, caractérisé en ce que des moyens de commande du circuit de déclenchement (20) associé au mécanisme (24) assurent la déconnexion durant le premier état transitoire du limiteur de surtension (16) avant le passage vers le deuxième état, et que le temps de déconnexion est inférieur à 20ms lorsque le courant limité atteint ou se trouve au-dessus d'une intensité de 10A et respectivement inférieur à 100ms et 50ms pour des intensités de courant de 0,25A et 1A.

2. Parafoudre déconnectable selon la revendication 1, caractérisé en ce que le circuit de déclenchement (20) du mécanisme (24) comporte un déclencheur électro-mécanique, notamment électromagnétique ou différentiel, ou un déclencheur électronique, ayant un seuil de déclenchement prédéterminé, autorisant en service normal le passage des faibles courants de fuite, et de décharges transitoires vers la terre, ledit déclencheur étant connecté en série avec le limiteur de surtension (16) et le contact (22) d'interruption.

3. Parafoudre déconnectable selon la revendication 1 ou 2, caractérisé en ce que la caractéristique de non fonctionnement du dispositif de déconnexion (18) est déterminée au moyen d'ondes de courant transitoires, ayant notamment des intensités jusqu'à 30kA pour des durées de 8/20 microsecondes, et jusqu'à 200A pour des durées de 10/1000 microsecondes.

## Patentansprüche

1. Abtrennbarer Überspannungsableiter, der zwischen einem Niederspannungs-Wechselstromnetz (12) und Erde eingesetzt ist und
   - einen Überspannungsbegrenzer (16) mit einem nichtlinearen spannungsabhängigen Widerstandselement, insbesondere einem Varistor und/oder einer gasgefüllten Löschfunkenstrecke,
   - eine Trennvorrichtung (18) mit einem über einen Auslösemechanismus (24) betätigten Unterbrecherkontakt (22) sowie
   - eine Auslöseschaltung (20) umfaßt, die auf den über den Überspannungsableiter (10) fließenden Strom anspricht, um bei defektem Überspannungsbegrenzer (16) mit dem Auslösemechanismus (24) zusammenzuwirken und durch Öffnen des Kontakts (22) die automatische Abtrennung des Überspannungsableiters (10) zu bewirken, wobei die Zerstörung des Überspannungsableiters (16) aus einem unumkehrbaren Übergang von einem ersten, vorübergehenden Kurzschlußzustand in einen zweiten, endgültigen Zerstörungszustand resultiert, dadurch gekennzeichnet, daß Steuermittel der dem Auslösemechanismus (24) zugeordneten Auslöseschaltung (20) die Trennung des Überspannungsbegrenzers (16) während des ersten Übergangszustands vor dem Übergang in den zweiten Zustand gewährleisten und daß die Trennzeit bei einem begrenzten Strom von 10 A oder höher unter 20 ms liegt sowie bei Strömen von 0,25 und 1 A unter 100 bzw. 50 ms beträgt.

2. Abtrennbarer Überspannungsableiter nach Anspruch 1, dadurch gekennzeichnet, daß die Auslöseschaltung (20) des Auslösemechanismus' (24) einen elektromechanischen Auslöser, insbesondere einen elektromagnetischen Auslöser, einen Differenzstromauslöser oder einen elektronischen Auslöser umfaßt, dessen Ansprechwert so eingestellt ist, daß im Normalbetrieb geringe Fehlerströme und Übergangsentladungen gegen Erde abfließen können, wobei der genannte Auslöser mit dem Überspannungsbegrenzer (16) und dem Unterbrecherkontakt (22) in Reihe geschaltet ist.

3. Abtrennbarer Überspannungsableiter nach Anspruch 1 oder 2, dadurch gekennzeichnet, daß die Kennwerte für das Nichtansprechen der Trennvorrichtung (18) auf der Grundlage von Übergangs-Stromwellenformen insbesondere für Stromstärken bis 30 kA mit einer Dauer von 8/20 Mikrosekunden bzw. für Ströme bis 200 A mit einer Dauer von 10/1000 Mikrosekunden bestimmt werden.

**Claims**

1. A disconnectable surge arrestor connected between a low-voltage AC power system (12) and earth, and comprising :
   - a voltage surge limiter (16) with non-linear element variable with the voltage, notably a variable resistance and/or gas discharge arrestor,
   - a disconnecting device (18) equipped with a breaking contact (22) actuated by a mechanism (24),
   - and a tripping circuit (20) sensitive to the current flowing in the surge arrestor (10) to cooperate with the mechanism (24) when the voltage surge limiter (16) is defective, resulting in automatic destruction of the surge arrestor (10) by opening of the contact (22), destruction of the voltage surge limiter (16) resulting from irreversible switching from a first transient short-circuiting state to a final destruction state, characterized in that means for controlling the tripping circuit (20) associated to the mechanism (24) perform disconnection during the first transient state of the voltage surge limiter (16) before switching to the second state, and that the disconnection time is less than 20ms when the limited current reaches or is greater than an intensity of 10A and respectively less than 100ms and 50ms for current intensities of 0.25A and 1A.

2. The disconnectable surge arrestor according to claim 1, characterized in that the tripping circuit (20) of the mechanism (24) comprises an electromechanical trip device, notably electromagnetic or differential, or an electronic trip device, having a preset tripping threshold, authorising in normal operation flow of small leakage currents and of transient discharges to earth, said trip device being connected in series with the voltage surge limiter (16) and breaking contact (22).

3. The disconnectable surge arrestor according to claim 1 or 2, characterized in that the non-operation characteristic of the disconnecting device (18) is determined by means of transient current waves, having notably intensities up to 30kA for durations of 8/20 microseconds, and up to 200A for durations of 10/1000 microseconds.

Fig.1

Fig. 2